# EUROPEAN PATENT APPLICATION

(11) **EP 2 083 348 A1**
(43) Date of publication of application: **29.07.2009**
(21) Application number: 08100697.5
(22) Date of filing: 21.01.2008
(51) Int. Cl.: G06F 3/048

(54) **Touch screen switching assembly**

(71) Applicant: Visiocorp Patents S.à.r.l., 1653 Luxembourg (LU)
(72) Inventor: Mayer, Kristine, 76192 Norrtälje (SE); Linden, Carl, 70226 Örebro (SE)
(74) Representative: Rausch, Gabriele

(57) **Abstract**

A finger operable switching assembly suitable for use in a motor vehicle is disclosed. The assembly includes: a housing 20; a touch screen 40 mounted within the housing 20 and slidably movable with respect to the housing 20 in at least two opposite directions; a screen overlay 30 defining a plurality of spatially separate apertures 31 -34 through which a finger of an operator can touch 40 the screen in corresponding spatially separate locations, the overlay 30 mounted to the housing 20; and a displacement switch assembly 52,54 responsive to sliding movement of the screen.

The displacement switch assembly 52, 54 provides an off condition, a first on condition and a second on condition.

## Description

### FIELD OF THE INVENTION

The present invention relates to switches and in particular to vehicle mounted switches.

### BACKGROUND

Modern vehicles, including trucks, automobiles, boats and aircraft typically have a large number of electrically controllable devices. Automobiles, for instance, are often equipped with power operated windows and power operated mirrors. Switches are required to enable the vehicle driver to operate such devices.

Switches in vehicles desirably are operable without the driver having to take his or her eyes off the road for long, if not at all. At least, it is desirable that switches are designed and positioned for ease of use to minimise distraction of the driver while driving.

It is desirable to make vehicle switches at a low cost, in an ergonomic and stylish form.

It is an object of the present invention to provide an improved switching assembly.

### SUMMARY OF THE INVENTION

According to a first aspect of the invention there is provided a finger operable switching assembly including:
a housing;
a touch screen mounted within the housing and slidably movable with respect to the housing in at least two opposite directions;
a screen overlay defining a plurality of spatially separate apertures through which a finger of an operator can touch the screen in corresponding spatially separate locations, the overlay mounted to the housing; and
a displacement switch assembly responsive to sliding movement of the screen.

Preferably the displacement switch assembly provides an off condition, a first on condition and a second on condition.

Preferably the touch screen has a neutral position in which the switch assembly is in the off condition.

Preferably the touch screen is biased towards the neutral condition.

Preferably the switch assembly is arranged and positioned such that haptic feedback is provided to the operator when sliding movement is sufficient to achieve either of the first or second on conditions.

Preferably the touch screen has a substantially planar upper surface and is displaceable in a direction normal to the upper surface by finger pressure thereby providing a haptic feel to the operator.

Preferably the haptic feel is provided by a plurality of elastic supports.

According to a second aspect of the invention there is provided a method of controlling a plurality of devices through a single user interface, the method including the steps of:
sensing a finger touch on a screen, the screen having a plurality of regions;
determining which region on the screen is being touched; and
sensing finger actuated sliding movement of the screen with respect to a housing.

A specific embodiment of the invention will now be described in some further detail with reference to and as illustrated in the accompanying figures. This embodiment is illustrative, and is not meant to be restrictive of the scope of the invention.

According to the second aspect of the invention there is provide a method of controlling a plurality of devices through a single user interface, the method including the steps of sensing a finger touch on a screen, the screen having a plurality of region, determining which region on the screen is being touched, and sensing finger actuated sliding movement of the screen with respect to a housing.

### DETAILED DESCRIPTION OF PREFERRED EMBODIMENT OF THE INVENTION

A preferred embodiment of the invention is illustrated in the accompanying representations in which:
Figure 1 is a perspective view of a finger operable switching assembly according to the invention.
Figure 2 is an exploded view of the switching assembly of Figure 1.
Figures 3, 4 and 5 are plan, side and end views of a vehicle door moulding containing the switching assembly of Figures 1 and 2.
Figures 6a, 6b and 6c are diagrammatic cross-sectional views of the switching assembly of Figures 1 and 2 in an at rest (neutral) position and in opposed first and second switching positions respectively.
Figures 7 and 8 are diagrammatic perspective views of alternative screen overlays for the assembly of Figure 1.

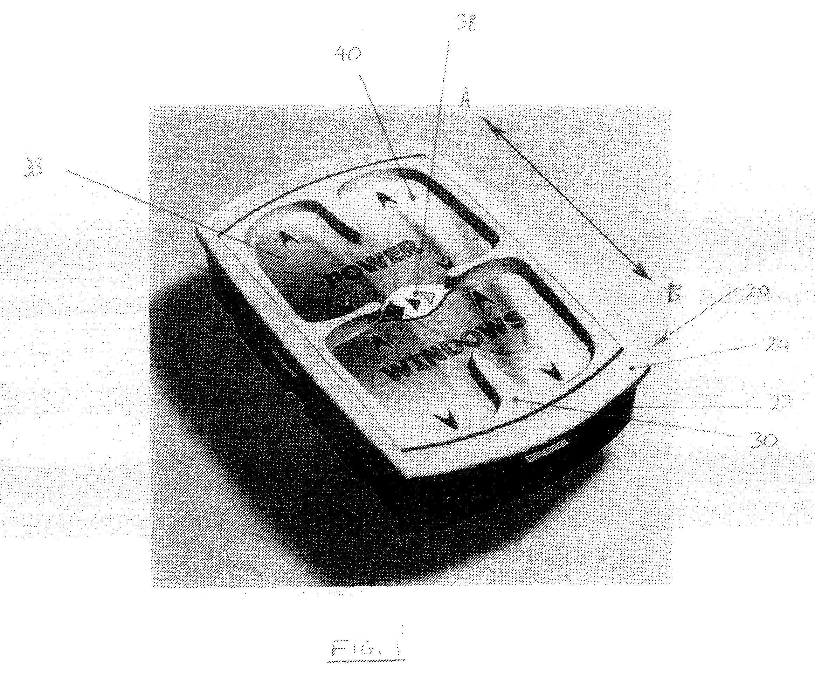

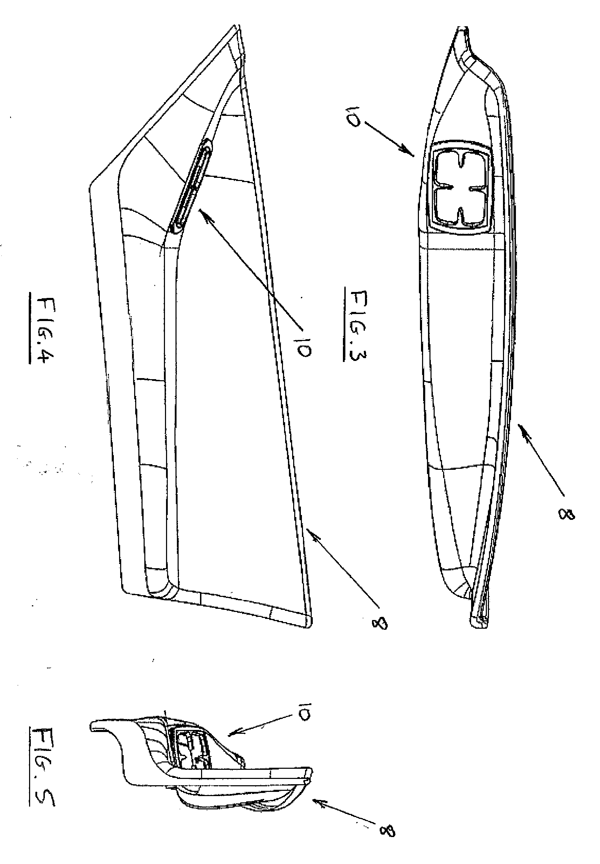

Referring to Figures 1, 3, 4 and 5, a finger operable touch screen switching assembly 10 is shown. The switching assembly 10 is located within a vehicle door moulding 8 as is most clearly shown in Figures 3, 4 and 5. In other applications, the switching assembly 10 may be located in other positions within a vehicle.

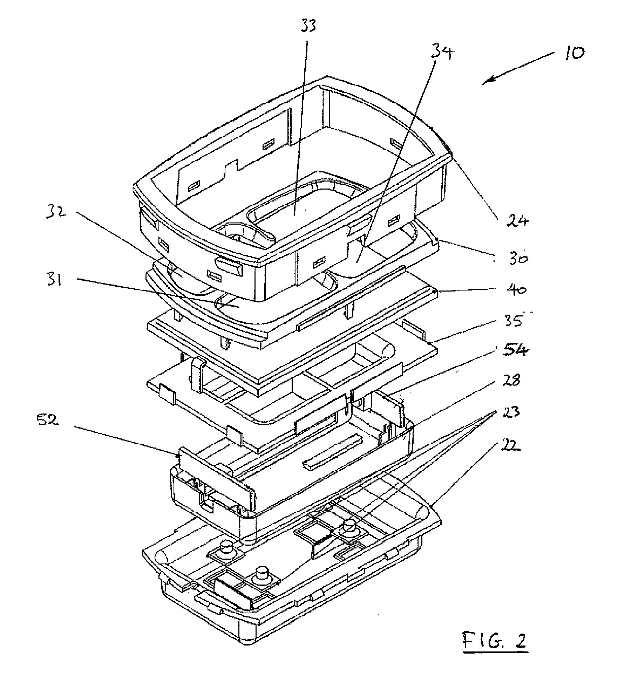

Referring to Figures 1 and 2, the switching assembly 10 includes a housing 20,a touch screen 40 mounted within a slide 28 and slidably moveable with respect to the housing 20 in at least two opposite directions as indicated by arrows A and B. The assembly 10 further includes a screen overlay 30 defining a plurality of spatially separate apertures 31, 32, 33 and 34 as is most clearly shown in the exploded view of Figure 2. A finger of an operator can touch the screen 40 in any one of four spatially separate locations through apertures 31, 32, 33 or 34. The overlay 30 is mounted to the housing 20. Finally, a displacement switch assembly 52,54 that is responsive to sliding movement of the screen 40 is provided.

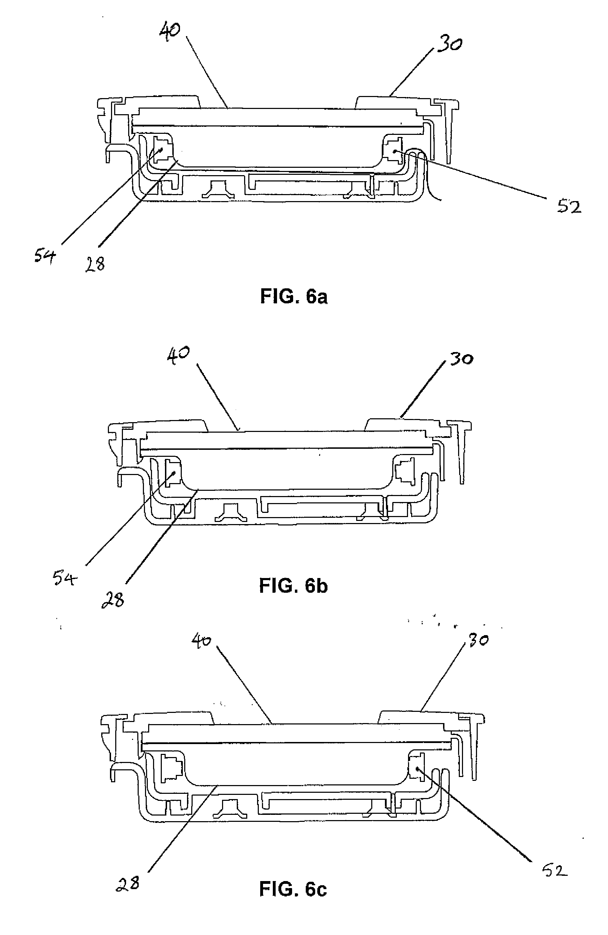

The displacement switch assembly is, in this embodiment of the invention, two separate displacement switches 52 and 54 each of which is arranged and constructed to provide tactile and haptic feedback upon actuation. The switches 52 and 54 are shown in Figures 6a, 6b and 6c.

Referring now to the exploded view of Figure 2, it can be seen that a bottom housing 22 supports four spaced apart silicon buttons 23 upon which the slide 28 rests. The slide 28 supports the touch screen 40 which is held between a screen support 35 and a screen overlay 30 and provide the user with a haptic feel when the screen is pressed down.

A micro processor based control system is operably connected to the switching assembly 10. The control system is programmed to receive and process spatial data output from the touch screen. The control system also receives and processes signals from the displacement switches 52 and 54. A power control circuit is provided to direct power to the motor that drives the windows up and down. The power control circuit is controlled by the micro processor based control system described above.

The operation of the finger operable switching assembly 10 will now be described with reference to Figures 1, 6a, 6b and 6c. The vehicle driver (operator) positions his or her finger through one of the apertures 31 to 34 through the screen overlay 30 and onto the touch screen 40. For instance, if the driver wishes to operate the vehicles front left window he or she would position his finger within the aperture 33 indicated in Figure 1. The shape of the screen overlay 30 is such that the operator can soon learn to recognise the various apertures 31, 32, 33 and 34 by feel thereby obviating or minimising the need to take his or her eyes off the road.

Having positioned his or her finger within the aperture 33 on the touch screen 40, for example, the driver can then slide the touch screen 40 in the direction indicated by arrow A to raise the front left window. Alternatively, the driver can slide the touch screen 40 back in the direction of arrow B to lower the left front window.

The arrangement described above overcomes significant shortcomings with conventional touch screens. For instance, with a conventional touch screen there is no tactile feedback as to the position of the users finger in relation to the overall area of the screen. In other words, an operator of a conventional touch screen may not know whether his or her finger is in the centre, the side or the bottom of the touch screen without looking it. Furthermore, with a conventional touch screen there is no tactile of haptic feedback to indicate that a virtual switch has been actuated. With the embodiment of the invention described above not only does the driver receive tactile feedback as to the position of his or her finger on the screen, he or she also is provided with tactile feedback from sliding movement in either of the two opposed directions indicated by arrows A and B. In practice, this is important because when driving a motor vehicle it is important that the driver minimise or eliminate the need for visual contact with switches or other actuators.

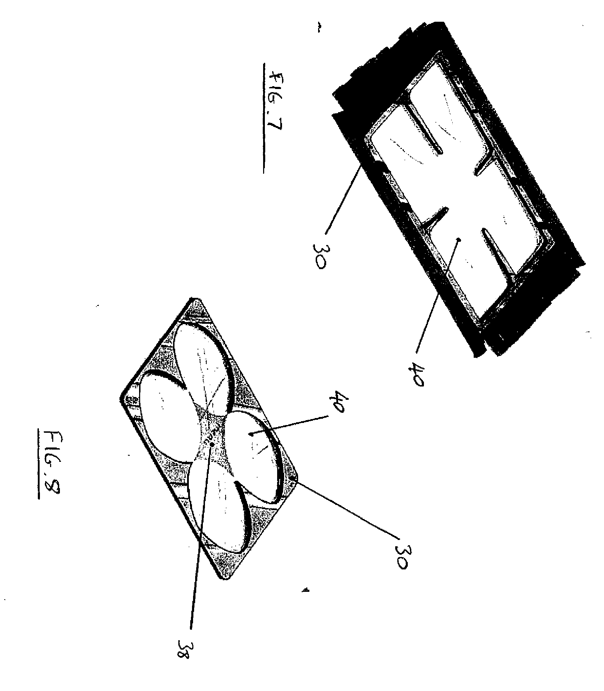

Referring to Figures 7 and 8, alternative screen overlays 30 are illustrated.

With the embodiment of the invention illustrated in the drawings and described above, four separate regions are provided for operating four power windows. A central area 38 is provided for further functionality. For instance, the touch screen may be configured to sense touch in the central area to activate a menu. This menu may allow the user to change the switching functions of the four areas 31 to 34. For instance, the menu may be configured to allow operation of boot release, fuel filler release and other functions.

As should be apparent from the above description, the finger operable switching assembly described above offers many advantages of prior switches. For instance, the switching assembly of the invention is able to combine many different switches into one single unit. This reduces complexity and costs.

The switching assembly 10 is easy to customise for different vehicles.

The switching assembly 10 described above can be used in conjunction with sophisticated computer control to provide a myriad of functions.

While the present invention has been described in terms of preferred embodiments in order to facilitate better understanding of the invention, it should be appreciated that various modifications can be made without departing from the principles of the invention. Therefore, the invention should be understood to include all such modifications within its scope.

## Claims

1. A finger operable switching assembly including:
a housing;
a touch screen mounted within the housing and slidably movable with respect to the housing in at least two opposite directions;
a screen overlay defining a plurality of spatially separate apertures through which a finger of an operator can touch the screen in corresponding spatially separate locations, the overlay mounted to the housing; and
a displacement switch assembly responsive to sliding movement of the screen.

2. An assembly as claimed in claim 1 wherein the displacement switch assembly provides an off condition, a first on condition and a second on condition.

3. An assembly as claimed in claim 2 wherein the touch screen has a neutral position in which the switch assembly is in the off condition.

4. An assembly as claimed in claim 3 wherein the touch screen is biased towards the neutral condition.

5. An assembly as claimed in claim 4 wherein the switch assembly is arranged and positioned such that haptic feedback is provided to the operator when sliding movement is sufficient to achieve either of the first or second on conditions.

6. An assembly as claimed in any one of claims 1 to 5 wherein the touch screen has a substantially planar upper surface and is displaceable in a direction normal to the upper surface by finger pressure thereby providing a haptic feel to the operator.

7. An assembly as claimed in claim 6 wherein the haptic feel is provided by a plurality of elastic supports.

8. A method of controlling a plurality of devices through a single user interface, the method including the steps of:
sensing a finger touch on a screen, the screen having a plurality of regions;
determining which region on the screen is being touched; and
sensing finger actuated sliding movement of the screen with respect to a housing.

## Amended claims

### Amended claims in accordance with Rule 137(2) EPC.

**1.** A finger operable switching assembly (10) including:
a housing (20);
a screen overlay (30) defining a plurality of spatially separate apertures through which a finger of an operator can touch the screen in corresponding spatially separate locations, the overlay mounted to the housing; and a touch screen,
**characterized in that**
the touch screen (40) is mounted within the housing (20) and is slidably movable with respect to the housing (20) in at least two opposite directions; and
a displacement switch assembly (52, 54) is responsive to sliding movement of the screen.

**2.** An assembly as claimed in claim 1 wherein the displacement switch assembly (52, 54) provides an off condition, a first on condition and a second on condition.

**3.** An assembly as claimed in claim 2 wherein the touch screen (40) has a neutral position in which the displacement switch assembly (52, 54) is in the off condition.

**4.** An assembly as claimed in claim 3 wherein the touch screen (40) is biased towards the neutral position.

**5.** An assembly as claimed in claim 4 wherein the switch assembly is arranged and positioned such that haptic feel is provided to the operator when sliding movement is sufficient to achieve either of the first or second on conditions.

**6.** An assembly as claimed in any one of claims 1 to 5 wherein the touch screen (40) has a substantially planar upper surface and is displaceable in a direction normal to the upper surface by finger pressure thereby providing a haptic feel to the operator.

**7.** A method of controlling a plurality of devices through a single user interface, the method including the steps of:
sensing a finger touch on a screen, the screen having a plurality of regions, which are separated by a screen overlay (30)
determining which region on the screen is being touched; and
sensing finger actuated sliding movement of the screen with respect to a housing by a displacement switch assembly (52, 54).
